# EUROPÄISCHE PATENTANMELDUNG

(11) **EP 2 133 008 A1**
(43) Veröffentlichungstag der Anmeldung: **16.12.2009**
(21) Anmeldenummer: 08010461.5
(22) Anmeldetag: 09.06.2008
(51) Int. Cl.: A47J 31/06

(54) **Brühkammer und Brühmaschine mit einer derartigen Brühkammer**

(71) Anmelder: Tchibo GmbH, 22297 Hamburg (DE)
(72) Erfinder: Balkau, Werner, 8762 Schwändi Glarus (CH); Schumann, Jörn, 21465 Reinbek (DE)
(74) Vertreter: UEXKÜLL & STOLBERG

(57) **Zusammenfassung**

Eine Brühkammer (1) für eine Brühmaschine enthält ein Unterteil (2), das zur Aufnahme von Brühgut eingerichtet ist und einen Auslass (20) für Brühgetränk aufweist, sowie ein Oberteil (4), das einen Einlass (44) für Brühwasser aufweist und in einem Schließzustand das Unterteil (2) abdeckt. Eine Verbindungseinrichtung zum druckfesten Verbinden des Unterteils (2) mit dem Oberteil (4) weist eine Anzahl von Kugeln (58) auf, die jeweils in einer Kugelführung für eine in Bezug auf eine Längsachse der Brühkammer (1) allgemein radiale Bewegung geführt sind und im Schließzustand in eine Vertiefung an einem Gegenstück (14) hineinragen und dabei am Ausweichen nach außen von einer Sperre (62) gehindert sind.

## Beschreibung

Die Erfindung betrifft eine Brühkammer für eine Brühmaschine, die z.B. zum Brühen von Kaffeegetränken eingerichtet ist, sowie eine Brühmaschine mit einer derartigen Brühkammer.

Aus der DE 10 2004 056 224 A1 ist eine Brühmaschine zum Brühen von Kaffeegetränken bekannt. Diese Brühmaschine enthält eine Brühkammer mit einem Unterteil, das zur Aufnahme einer Portionskapsel mit Brühgut eingerichtet ist und einen Auslass für das Brühgetränk aufweist. Als Oberteil der Brühkammer dient eine nach unten freiliegende Anlagefläche der Kaffeemaschine, von der ein Einstichdorn nach unten vorragt. Bei dieser Kaffeemaschine wird das als separate Komponente konzipierte Unterteil der Brühkammer in eine Halteeinrichtung eingesetzt und beim Umlegen eines Hebels an die Anlagefläche herangeführt, so dass das Oberteil in einem geschlossenen Zustand das Unterteil abdeckt. Da das Brühwasser unter Druck in die Portionskapsel eingegeben wird und sich der Druck dabei auf die Brühkammer überträgt, muss die Halteeinrichtung zum druckfesten Verbinden des Unterteils mit dem Oberteil eingerichtet sein. Die EP 1 559 351 A2 zeigt diese Halteeinrichtung und ihren Verriegelungsmechanismus für die Brühkammer im Detail.

Während bei der vorgenannten Kaffeemaschine das Brühgut in einer Portionskapsel bereitgestellt wird, die in die Brühkammer einzusetzen ist, gibt es auch Brühmaschinen, bei denen das Brühgut als gepresstes oder lose befülltes Pad oder Pod zwischen zwei Filterlagen in die Brühkammer eingelegt wird. Ein Beispiel dafür ist in der EP 0 904 717 A1 beschrieben. Bei klassischen Espressomaschinen wird der gemahlene Espressokaffee direkt in die Brühkammer eingefüllt.

In all diesen Fällen wird das Brühwasser unter Druck in die Brühkammer eingegeben. Wenn ausschließlich Filterkaffee verwendet wird, ist der Druck relativ niedrig und beträgt nur wenige bar, aber zum Aufbrühen von Espressokaffee ist die Brühkammer einem Druck in der Größenordnung von 20 bar ausgesetzt.

Die Verbindungseinrichtung, die das Unterteil und das Oberteil der Brühkammer nach dem Einlegen des Brühguts zusammenhält, ist daher beim Betrieb einer Brühmaschine ziemlich großen Kräften ausgesetzt. Dies erfordert eine stabile Konstruktion, die auch verwindungssteif sein muss, damit die zwischen dem Unterteil und dem Oberteil der Brühkammer befindliche Dichtung auch bei hohem Betriebsdruck sicher anliegen kann, z.B. an der Oberseite einer Portionskapsel. Andererseits soll sich die Verbindungseinrichtung schnell öffnen lassen, damit der Benutzer einen bequemen Zugang zu der Brühkammer erhält. Um diese Anforderungen zu erfüllen, haben die vorbekannten Brühkammern eine aufwendig konstruierte Halte- bzw. Verbindungseinrichtung.

Es ist Aufgabe der Erfindung, eine Brühkammer zu schaffen, bei der die Verbindungseinrichtung für eine sichere druckfeste Verbindung zwischen dem Unterteil und dem Oberteil der Brühkammer sorgt, dabei aber einfach zu öffnen ist und im Prinzip von leichter Konstruktion sein kann.

Diese Aufgabe wird gelöst durch eine Brühkammer mit den Merkmalen des Anspruchs 1. Der Anspruch 13 betrifft eine Brühmaschine mit einer derartigen Brühkammer. Vorteilhafte Ausgestaltungen der Erfindung ergeben sich aus den Unteransprüchen.

Die erfindungsgemäße Brühkammer für eine Brühmaschine enthält ein Unterteil, das zur Aufnahme von Brühgut eingerichtet ist und einen Auslass für Brühgetränk aufweist, ein Oberteil, das einen Einlass für Brühwasser aufweist und in einem Schließzustand das Unterteil abdeckt, sowie eine Verbindungseinrichtung, die zum druckfesten Verbinden des Unterteils mit dem Oberteil im Schließzustand eingerichtet ist. Das Brühgut kann z.B. in einer Portionskapsel oder einem Filterpad bereitgestellt werden, lässt sich grundsätzlich aber auch direkt in das Unterteil eingeben (wobei in letzterem Fall vorzugsweise zusätzliche Filterelemente im oder am Unterteil angeordnet sind oder angeordnet werden).

Erfindungsgemäß weist die Verbindungseinrichtung eine Anzahl von Kugeln auf, die jeweils in einer Kugelführung für eine in Bezug auf eine Längsachse der Brühkammer allgemein radiale Bewegung geführt sind. Die Kugeln ragen im Schließzustand der Brühkammer in eine Vertiefung an einem Gegenstück hinein und sind dabei von einer Sperre am Ausweichen nach außen gehindert.

Mit Hilfe einer größeren Anzahl von Kugeln, die über den Umfang der Brühkammer verteilt sind, lässt sich eine sehr sichere druckfeste Verbindung zwischen dem Unterteil und dem Oberteil der Brühkammer erzielen, wobei es auch beim Druckaufbau nicht zu unerwünschten Verwindungen kommt. Dies ist mit einem Flansch mit vielen Schrauben vergleichbar, aber im Gegensatz zu dem Flansch lässt sich die Verbindungseinrichtung der Brühkammer ganz schnell lösen, damit der Innenraum der Brühkammer zugänglich wird.

Grundsätzlich kann auch eine geringere Zahl von Kugeln verwendet werden, aber dann ist in der Regel eine stärkere Konstruktion erforderlich, um die notwendige Verwindungsfestigkeit der Brühkammer im Schließzustand zu erreichen.

Unter dem Begriff "Kugel" werden hier nicht nur Kugeln in geometrisch strengem Sinne verstanden, sondern auch andere Körper, die in einer Führung für eine in Bezug auf die Längsachse der Brühkammer allgemein radiale Bewegung geführt sind und im Schließzustand der Brühkammer in eine Vertiefung an einem Gegenstück hineinragen und beim Öffnen der Brühkammer nach außen ausweichen und dabei aus der Vertiefung austreten können.

Bei vorteilhaften Ausführungsformen der Erfindung ist die Sperre allgemein in Richtung der Längsachse von einer Schließposition im Schließzustand der Brühkammer in eine Öffnungsposition bewegbar. In der Öffnungsposition gestattet die Sperre ein Ausweichen der jeweiligen Kugel nach außen. Die Sperre ist hierbei als gemeinsame Sperre für alle Kugeln konstruiert, so dass sich durch eine Bewegung der Sperre in die Öffnungsposition die Verbindungseinrichtung in bedienungsfreundlicher Weise öffnen lässt.

Vorzugsweise weist das Unterteil der Brühkammer eine Seitenwand auf, an deren Außenseite die Vertiefungen angeordnet sind. Bei einer bevorzugten Ausführungsform sind dabei die Vertiefungen als für alle Kugeln gemeinsame umlaufende Rille in der Seitenwand des Unterteils ausgestaltet.

Die Kugelführungen können als Durchgangsöffnungen in einem Kugelhalter ausgebildet sein, der eine Komponente des Oberteils darstellt und im Schließzustand der Brühkammer die Seitenwand des Unterteils zumindest teilweise überdeckt. Bei dieser Konstruktion ist die Verbindungseinrichtung also teilweise am Oberteil (Kugelhalter mit Kugeln) und teilweise am Unterteil (Vertiefungen an der Seitenwand des Unterteils) angeordnet. Dabei kann auch die Sperre eine Komponente des Oberteils sein, so dass die Verbindungseinrichtung keine von dem Unterteil und dem Oberteil separaten Teile aufweist. Bei anderen Ausgestaltungen ist es auch denkbar, dass die Kugeln der Verbindungseinrichtung am Unterteil und die Vertiefungen, in die die Kugeln im Schließzustand hineinragen, am Oberteil der Brühkammer vorgesehen sind.

Die Durchgangsöffnungen in dem zuvor erwähnten Kugelhalter sind vorzugsweise radial nach innen zu verengt, um ein Herausfallen der Kugeln nach innen zu verhindern. Diese Verengung ist so gering, dass die Kugeln im Schließzustand trotzdem nach innen in die Vertiefungen bzw. die Rille in der Seitenwand des Unterteils vorragen. Ohne die Verengungen oder eine anders gestaltete Rückhalteeinrichtung für die Kugeln würden die Kugeln aus den Kugelführungen herausfallen, wenn sie im geöffneten Zustand der Brühkammer nicht von den Vertiefungen an der Seitenwand des Unterteils daran gehindert werden.

Bei einer vorteilhaften Ausführungsform stellt die Sperre eine Komponente des Oberteils dar und ist als umlaufender Ring ausgestaltet, der relativ zu dem Kugelhalter verschiebbar ist, in der Schließposition die Außenseiten der Durchgangsöffnungen abdeckt und in der Öffnungsposition ein radiales Ausweichen der Kugeln in einen Zwischenraum gestattet. Mit einer derartigen Sperre lässt sich durch eine einfache Bewegung in Richtung der Längsachse der Brühkammer die Brühkammer im Schließzustand verriegeln, indem die Kugeln am Ausweichen aus den Vertiefungen gehindert werden, oder zum Öffnen entriegeln, indem den Kugeln ein Ausweichen aus den Vertiefungen gestattet wird. Im letzteren Fall treten die Kugeln wegen ihrer gekrümmten Oberfläche bereits bei einer geringen in Richtung der Längsachse wirkenden Kraft aus den Vertiefungen aus, so dass die Verbindung zwischen dem Unterteil und dem Oberteil der Brühkammer gelöst ist.

Die Sperre kann in Bezug auf den Kugelhalter durch Federwirkung auf die Öffnungsposition zu vorgespannt sein. In diesem Fall sind das Unterteil und das Oberteil der Brühkammer fest miteinander verbunden, wenn die Sperre gegen die Federwirkung in Schließposition gedrückt ist. Eine Fixierung dieses Schließzustandes lässt sich bereits mit geringem Kraftaufwand erreichen, der um Größenordnungen kleiner sein kann als die von dem Brühdruck hervorgerufenen Kräfte.

Zwischen dem Oberteil und dem Unterteil der Brühkammer kann eine druckfeste Dichtung vorgesehen sein, die vorzugsweise am Oberteil oder am Unterteil befestigt ist. Wenn die Brühkammer mit einer in das Unterteil eingesetzten Portionskapsel verwendet wird, ist es vorteilhaft, wenn diese Dichtung an der Oberseite der Portionskapsel anliegt und somit die Oberseite der Portionskapsel gegen das Oberteil der Brühkammer abdichtet.

Bei einer vorteilhaften Ausführungsform weist das Oberteil einen zentralen Deckelbereich auf, von dem mindestens ein Einstichdorn nach unten vorragt. Mit dem Einstichdorn lässt sich der Deckel einer in das Unterteil der Brühkammer eingesetzten Portionskapsel perforieren, wenn das Unterteil und das Oberteil relativ zueinander in den Schließzustand bewegt werden. Der Einstichdorn kann hohl sein, um das Brühwasser über den Einstichdorn in die Brühkammer einzulassen. Falls unabhängig von dem Einstichdorn ein Einlass für das Brühwasser vorgesehen ist, lässt sich auch ein massiver Einstichdorn verwenden. Falls die Brühkammer nicht mit einer im Lieferzustand allseitig geschlossenen Portionskapsel verwendet werden soll, sondern z.B. mit einem oder mehreren Kaffeepads oder mit losem Mahlkaffee, braucht die Brühkammer an ihrem Oberteil kein Perforationsmittel vorzusehen; statt dessen kann dort z.B. ein Lochblech zur gleichmäßigen Verteilung des unter Druck einströmenden Brühwassers angebracht sein.

Das Unterteil kann einen Bodenbereich aufweisen, von dem mindestens ein Einstichdorn nach oben vorragt, der vorzugsweise von einer Feder umgeben ist. Eine derartige Ausführungsform ist wiederum besonders für die Verwendung mit Portionskapseln gedacht, wobei der Einstichdorn z.B. beim Einsetzen der Portionskapsel in das Unterteil der Brühkammer den Boden der Portionskapsel durchstößt, um bei dem anschließenden Brühvorgang das Brühgetränk abzuleiten. (Bei der Verwendung von Pads oder Mahlkaffee können anstelle eines Dornes ein geeignetes Filtrationsmittel, z.B. ein einfaches Lochblech, zum Zurückhalten des Extraktionsgutes sowie eine Getränkeableiteinrichtung vorgesehen sein.) Der Einstichdorn am Unterteil ist vorzugsweise von einer Feder umgeben, z.B. einer Schraubenfeder, die etwas länger ist als der Einstichdorn. Diese Feder verhindert einerseits, dass der Benutzer versehentlich mit dem Einstichdorn in Berührung kommt, und drückt andererseits die Portionskapsel nach oben, wenn sich die Brühkammer nicht im Schließzustand befindet, so dass sich die Portionskapsel nach Beendigung des Brühvorgangs leichter entnehmen lässt.

Die erfindungsgemäße Brühkammer kann als eigenständige Komponente einer Brühmaschine konzipiert sein und lässt sich grundsätzlich in ganz verschiedene Arten von Brühmaschinen einbauen. Um dies zu erleichtern, weist das Oberteil vorzugsweise in seinem Außenbereich eine Kupplung auf, an die eine Leitung für die Zufuhr von Brühwasser angeschlossen werden kann.

Eine Brühmaschine, die eine erfindungsgemäße Brühkammer enthält, weist außerdem eine Heißwassereinrichtung zum Zubereiten von Brühwasser und zum Zuführen des Brühwassers zu dem Einlass der Brühkammer auf. Der grundsätzliche Aufbau einer derartigen Brühmaschine, z.B. mit einem Gehäuse, einem Wassertank, einem Boiler, einer Wasserpumpe, Leitungen und einer Steuerung, ist allgemein bekannt.

Bei einem Beispiel für eine solche Brühmaschine weist das Gehäuse der Brühmaschine einen Deckel auf, der von einem Betriebszustand in einen Öffnungszustand bewegbar ist. Im Öffnungszustand ist das Oberteil der Brühkammer von dem Unterteil der Brühkammer abgehoben und das Unterteil der Brühkammer zugänglich, so dass z.B. eine Portionskapsel, ein Kaffeepad, ein Kaffepod oder Mahlkaffee eingebracht werden kann. Der Deckel ist mit der Sperre gekoppelt und bewegt beim Übergang vom Betriebszustand in den Öffnungszustand die Sperre in die Öffnungsposition. Bei einer derartigen Ausgestaltung bemerkt der Benutzer gar nicht, dass er beim Öffnen des Deckels der Brühmaschine gleichzeitig die Verbindungseinrichtung der Brühkammer löst. Denn die erfindungsgemäß konstruierte Verbindungseinrichtung lässt sich ohne großen Kraftaufwand bedienen, obwohl sie selbst einem hohen Brühdruck standhalten kann.

Eine Rasteinrichtung, mit der der Deckel der Brühmaschine im Betriebszustand verrastet wird, kann vorteilhaft sein, insbesondere, wenn die Sperre der Verbindungseinrichtung in Öffnungsposition vorgespannt ist. In diesem Fall braucht die Rasteinrichtung jedoch lediglich kräftiger zu sein als die Vorspannung, muss also bei weitem nicht dem Brühdruck standhalten.

Im Folgenden wird die Erfindung anhand eines Ausführungsbeispiels weiter erläutert. Die Zeichnungen zeigen in
- Figur 1: eine Explosionsansicht einer Ausführungsform der erfindungsgemäßen Brühkammer,
- Figur 2: eine Seitenansicht der Brühkammer gemäß Figur 1 im geschlossenen Zustand,
- Figur 3: einen Längsschnitt durch die Brühkammer gemäß Figur 1 im geschlossenen Zustand in einer Ebene, die durch die in Figur 1 angezeigte Längsachse verläuft,
- Figur 4: in Teil (a) einen Längsschnitt durch die Brühkammer ähnlich wie Figur 3 und in Teil (b) eine Detailvergrößerung, die die Wirkungsweise einer Verbindungseinrichtung im geschlossenen Zustand verdeutlicht,
- Figur 5: in Teil (a) einen Längsschnitt wie in Figur 4 (a) während des Öffnens der Brühkammer und in Teil (b) eine Detailvergrößerung, die verdeutlicht, wie die Verbindungseinrichtung die Verbindung zwischen Unterteil und Oberteil freigibt,
- Figur 6: einen Längsschnitt wie in Figur 5(a), wobei das Oberteil der Brühkammer, das teilweise in Seitenansicht dargestellt ist, von dem Unterteil abgehoben ist, und
- Figur 7: einen schematischen Längsschnitt durch eine Brühmaschine, in die die Brühkammer gemäß den Figuren 1 bis 6 eingebaut ist.

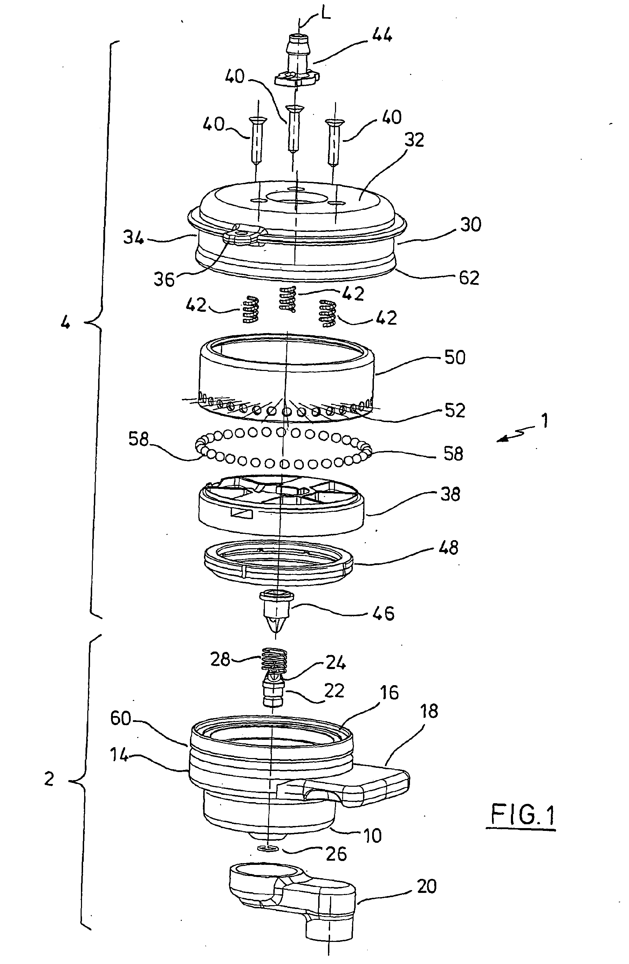

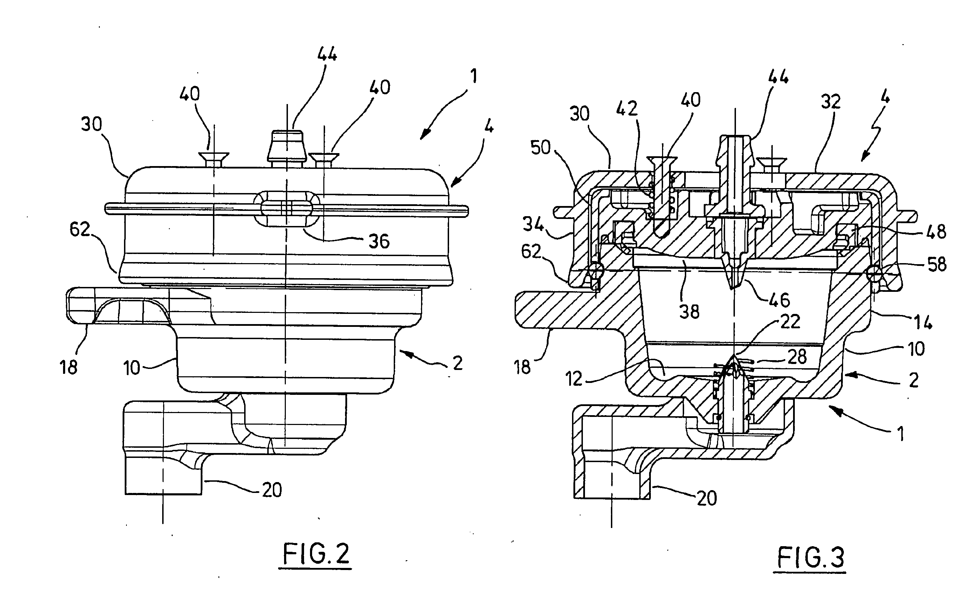

In Figur 1 ist eine Ausführungsform einer Brühkammer 1 in. Explosionsansicht veranschaulicht. Die Figuren 2 und 3 zeigen die Brühkammer 1 in zusammengebautem Zustand, und zwar die Figur 2 in Seitenansicht und die Figur 3 im Längsschnitt.

Die Brühkammer 1 weist ein Unterteil 2 und ein Oberteil 4 auf. In Figur 1 ist dargestellt, welche Einzelteile im Ausführungsbeispiel dem Unterteil 2 und dem Oberteil 4 zugeordnet sind.

Mit Hilfe einer Verbindungseinrichtung können das Unterteil 2 und das Oberteil 4 druckfest miteinander verbunden werden. Im Ausführungsbeispiel ist die Verbindungseinrichtung keine selbstständige Komponente der Brühkammer 1, sondern die einzelnen Bauteile der Verbindungseinrichtung sind im Wesentlichen dem Oberteil 4 zugeordnet. In den Figuren 2 und 3 befindet sich die Brühkammer 1 im geschlossenen Zustand (Schließzustand), in dem die Verbindungseinrichtung für eine druckfeste Verbindung sorgt.

Das Unterteil 2 enthält ein als Schale 10 gestaltetes Bauteil mit einem Bodenbereich 12 und einer Seitenwand 14. Am oberen Rand der Seitenwand 14 ist eine Dichtfläche 16 vorgesehen. Von der Seitenwand 14 springt ein Halteelement 18 vor.

Unter dem Bodenbereich 12 der Schale 10 ist ein Auslass 20 angebracht, über den ein Brühgetränk aus der Schale 10 abgeleitet werden kann.

Im Ausführungsbeispiel ist die Brühkammer 1 zur Verwendung mit einer Portionskapsel konzipiert, die Brühgut (z.B. Mahlkaffee) enthält. Daher ragt durch eine Öffnung im Bodenbereich 12 ein hohler Einstichdorn 22, der im Bereich seiner Spitze mit Öffnungen 24 versehen ist. Der Einstichdorn 22 ist mit einem Sprengring 26 befestigt. Der Bereich der Spitze des Einstichdorns 22 ist von einer Schraubenfeder 28 umgeben, die einerseits verhindern soll, dass ein Benutzer unbeabsichtigt mit dem Einstichdorn 22 in Kontakt kommt, und die andererseits eine in das Unterteil 2 eingesetzte Portionskapsel etwas nach oben drückt, so dass sie sich später leicht aus dem Unterteil 2 entfernen lässt.

Das Oberteil 4 weist ein als Verschlussglocke 30 bezeichnetes Bauteil auf, das einstückig einen Deckelbereich 32, eine umlaufende Seitenwand 34 und zwei Befestigungsansätze 36 enthält.

Ein weiteres Bauteil des Oberteils 4 ist ein Zentralteil 38, das so an der Verschlussglocke 30 befestigt ist, dass es sich etwas in Richtung der in Figur 1 eingezeichneten Längsachse L verschieben lässt. Zur Befestigung dienen drei Schraubstifte 40, die durch Öffnungen im Deckelbereich 32. der Verschlussglocke 30 geführt und in das Zentralteil 38 eingeschraubt sind. Die Schäfte der Schraubstifte 40 sind jeweils von einer Schraubenfeder 42 umgeben, die in dem in Figur 3 dargestellten Schließzustand der Brühkammer 1 zusammengedrückt ist.

Durch eine relativ große Öffnung im Deckelbereich 32 der Verschlussglocke 30 ragt ein Einlass 44, der fest und in abgedichteter Weise mit einem hohlen Einstichdorn 46 verbunden ist, der in einer zentralen Öffnung in dem Zentralteil 38 befestigt ist. Der Einstichdorn 46 weist im Bereich seiner Spitze Öffnungen auf und dient zum Perforieren des Deckels einer in die Brühkammer 1 eingesetzten Portionskapsel. Über den Einlass 44 und den Einstichdorn 46 kann Brühwasser ins Innere der Portionskapsel geleitet werden.

In dem Zentralteil 38 ist eine umlaufende Nut vorgesehen, siehe Figur 3, in die eine Dichtung 48 eingesetzt ist. Im Schließzustand der Brühkammer 1 dichtet die Dichtung 48 das Oberteil 4 gegen die Dichtfläche 16 des Unterteils 2 (oder gegen die Oberseite einer in das Unterteil 2 eingesetzten Portionskapsel) ab.

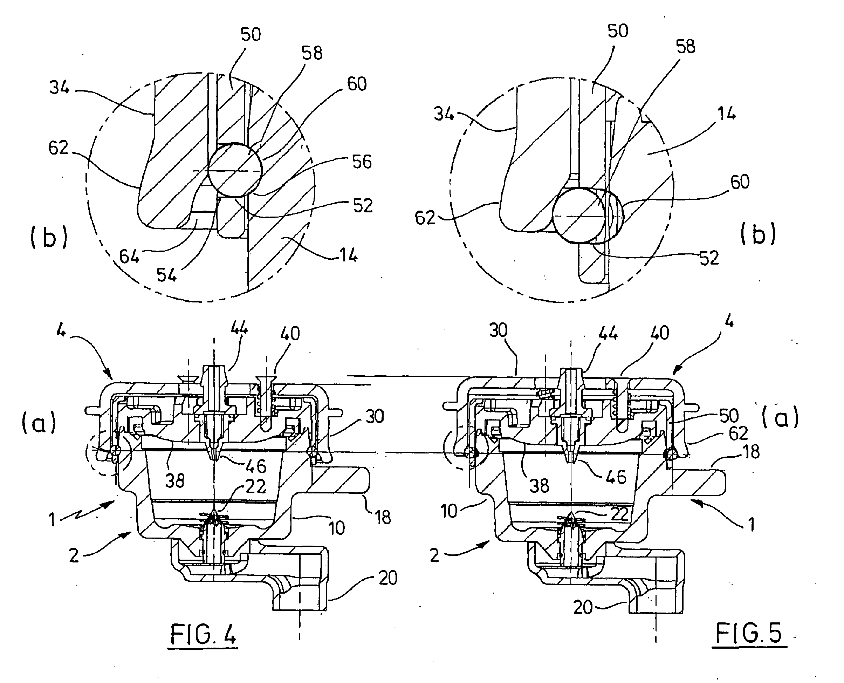

Die Verbindungseinrichtung weist einen Kugelhalter 50 auf, der als ringförmiges Teil gestaltet ist und das Zentralteil 38 umgibt und fest damit verbunden ist. In der Nähe seines unteren Randes ist über den gesamten Umfang des Kugelhalters 50 verteilt eine Anzahl von Durchgangsöffnungen 52 angeordnet. Die Durchgangsöffnungen 52 erstrecken sich über die volle Materialstärke des Kugelhalters 50 und sind jeweils leicht konisch geformt, so dass sie an ihrer Außenseite 54 einen etwas größeren Durchmesser besitzen als an ihrer Innenseite 56, siehe Figur 4(b). Die Durchgangsöffnungen 52 dienen als Kugelführungen, und zwar jeweils für eine Kugel 58. Wie in den Figuren 4(b) und 5(b) erkennbar, kann sich eine Kugel 58 innerhalb einer Durchgangsöffnung 52 bewegen, und zwar, bezogen auf die Längsachse L, radial nach innen so weit, dass sie in Bezug auf den Kugelhalter 50 nach innen vorragt, aber von dem relativ kleinen Durchmesser an der Innenseite 56 der Durchgangsöffnung 52 am Herausfallen gehindert wird. Radial nach außen kann die Kugel 58 im Prinzip die Durchgangsöffnung 52 verlassen, wird daran aber bei zusammengebauter Brühkammer 1 von der Seitenwand 34 der Verschlussglocke 30 gehindert.

In Figur 4(a) ist die Brühkammer 1 im geschlossenen Zustand dargestellt, wobei das Unterteil 2 und das Oberteil 4 mittels der Verbindungseinrichtung druckfest miteinander verbunden sind. In diesem Zustand ist die Verschlussglocke 30 in Bezug auf das Zentralteil 38 gegen die Wirkung der Schraubenfedern 42 nach unten gedrückt, so dass die Kugeln 58 radial nach innen vorragen und durch die Innenseite der Seitenwand 34 daran gehindert werden, sich radial nach außen zu verlagern. In diesem Zustand greifen die Kugeln 58 in eine umlaufende Rille 60 ein, die an der Seitenwand 14 des Unterteils 2 angeordnet ist, siehe Figur 3, Figur 4(a) und Figur 4(b). Der untere Bereich der Seitenwand 34 der Verschlussglocke 30 ist hier als Sperre 62 bezeichnet.

Wenn nun unter der Wirkung der Schraubenfedern 42 die Verschlussglocke 30 in Richtung der Längsachse L nach oben verschoben wird, was bis zu dem durch die Schraubstifte 40 gegebenen Anschlag möglich ist, verlässt die Sperre 62 ihre Schließposition und geht in die in Figur 5 (a) und Figur 5(b) dargestellte Öffnungsposition über. Die Sperre 62 ist so gestaltet, dass die Kugeln 58 nun in einen Zwischenraum 64 eintreten können, wobei sie nicht mehr in die Rille 60 hineinragen. Die Sperre 62 hindert die Kugeln 58 aber nach wie vor daran, aus den Durchgangsöffnungen 52 herauszufallen. Da die Kugeln 58 in den Durchgangsöffnungen 52 im Prinzip frei beweglich sind und wegen der Querschnittsform der Rille 60, nehmen die Kugeln 58 spätestens dann die in Figur 5(b) gezeigte Position ein, wenn die Verschlussglocke 30 in Bezug auf den Kugelhalter 50 ganz nach oben verschoben ist, wie in Figur 5(a) dargestellt, und bei einer weiteren nach oben gerichteten Kraftausübung den Kugelhalter 50 mitnimmt. Dafür sind keine großen Kräfte erforderlich.

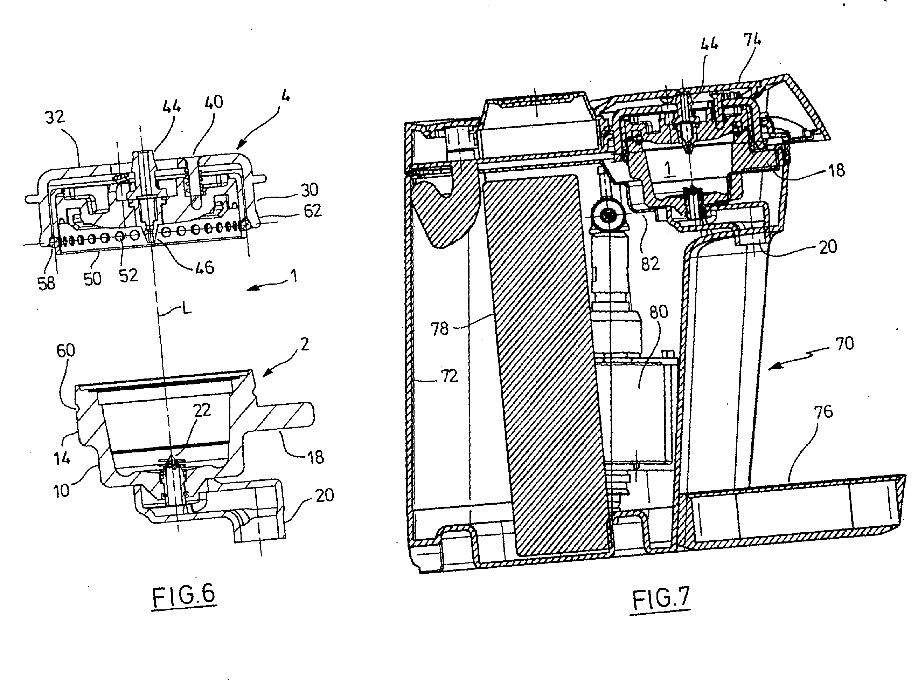

Die Verbindungseinrichtung ist nun vollständig entriegelt, so dass das Oberteil 4 von dem Unterteil 2 getrennt werden kann (geöffneter Zustand der Brühkammer 1), siehe Figur 6.

Im Ausführungsbeispiel ist eine große Zahl von Kugeln 58 vorgesehen, die im Schließzustand der Brühkammer 1, gleichmäßig verteilt über den Umfang der Seitenwand 14, in die Rille 60 eingreifen. Das Unterteil 2 und das Oberteil 4 sind daher sehr sicher und fest miteinander verbunden, was auch einem hohen Brühdruck standhält. Wegen der gleichmäßigen Verteilung der Kugeln 58 treten nur geringe Durchbiegungen auf, so dass die Wirkung der Dichtung 48 gewährleistet ist.

In Figur 7 ist in schematischer Ansicht eine Brühmaschine 70 dargestellt, in die die Brühkammer 1 eingebaut ist. Die Brühmaschine 70 besitzt ein Gehäuse 72 mit einem Deckel 74. Unterhalb der Brühkammer 1 ist ein Stellbereich 76 vorgesehen, auf dem ein Auffangbehälter (z.B. eine Tasse) für das Brühgetränk abgestellt werden kann.

Im Inneren der Brühmaschine 70 sind ein Boiler 78 für die Erwärmung des Brühwassers und eine Pumpe 80 für die Förderung des Brühwassers und zur Druckerzeugung zu erkennen. Weitere Komponenten, wie ein Vorratsbehälter für das noch nicht erwärmte Brühwasser, eine Maschinensteuerung und Leitungen, sind nicht dargestellt. Das Funktionsprinzip der Brühmaschine 70 ist dem Fachmann bekannt und braucht daher nicht näher erläutert zu werden.

Wie in Figur 7 ersichtlich, ruht das Unterteil 2 der Brühkammer 1 in der Brühmaschine 70 auf einer Halterung 82. Das Halteelement 18 ragt dabei in eine Aussparung der Halterung 82, um das Unterteil 2 zu arretieren. Das Oberteil 4 der Brühkammer 1 ist mit Hilfe der Befestigungsansätze 36 an der Innenseite des Deckels 74 angebracht. Der Deckel 74 ist in der Darstellung nach Figur 7 an seiner linken Seite am Gehäuse 72 angelenkt und lässt sich im Gegenzeigersinn nach oben wegklappen. Wenn der Deckel 74 geschlossen ist, drückt er die Verschlussglocke 30 mit der Sperre 62 gegen die Wirkung der Schraubenfedern 42 nach unten, so dass sich die Brühkammer 1 im Schließzustand befindet und sicher und druckfest verriegelt ist. Der Deckel 74 ist in diesem Zustand durch eine Raste arretiert, die in Figur 7 nicht eingezeichnet ist.

Wird der Deckel 74 geöffnet, wozu nur geringe Kräfte erforderlich sind, öffnet sich die Brühkammer 1 in der anhand der Figuren 5 und 6 erläuterten Weise. Das Unterteil 2 der Brühkammer 1 ist nun frei zugänglich, so dass man z.B. eine Portionskapsel in das Unterteil 2 einsetzen kann. Wenn danach der Dekkel 74 geschlossen wird, geht die Brühkammer 1 in den Schließzustand über. Gleichzeitig perforieren der Einstichdorn 22 die Unterseite und der Einstichdorn 46 die Oberseite der Portionskapsel. Wenn die Brühmaschine 70 in Betrieb genommen wird, fördert die Pumpe 80 Wasser in den Boiler 78, das als erwärmtes Brühwasser über eine in Figur 7 nicht eingezeichnete Leitung zu dem Einlass 44 strömt und durch den Einstichdorn 46 in das Innere der Portionskapsel gelangt. Das fertige Brühgetränk fließt durch den Einstichdorn 22 und den Auslass 20 in das Gefäß im Stellbereich 76.

Nach Beendigung des Brühvorgangs kann der Benutzer den Deckel 74 öffnen, so dass das Unterteil 2 der Brühkammer 1 frei zugänglich wird, wie bereits erläutert. Falls erforderlich, z.B. für Reinigungszwecke, kann der Benutzer das Unterteil 2 auf der Halterung 82 in der Darstellung gemäß Figur 7 nach links verschieben, so dass das Halteelement 18 von der Halterung 82 freigegeben wird und sich das Unterteil 2 ganz aus der Brühmaschine 70 entnehmen lässt.

## Patentansprüche

1. Brühkammer für eine Brühmaschine, mit
- einem Unterteil (2), das zur Aufnahme von Brühgut eingerichtet ist und einen Auslass (20) für Brühgetränk aufweist,
- einem Oberteil (4), das einen Einlass (44) für Brühwasser aufweist und in einem Schließzustand das Unterteil (2) abdeckt, und
- einer Verbindungseinrichtung (50, 58, 60, 62), die zum druckfesten Verbinden des Unterteils (2) mit dem Oberteil (4) im Schließzustand eingerichtet ist,
**dadurch gekennzeichnet, dass** die Verbindungseinrichtung eine Anzahl von Kugeln (58) aufweist, die jeweils in einer Kugelführung (50, 52) für eine in Bezug auf eine Längsachse (L) der Brühkammer (1) allgemein radiale Bewegung geführt sind und im Schließzustand in eine Vertiefung (60) an einem Gegenstück (14) hineinragen und dabei am Ausweichen nach außen von einer Sperre (62) gehindert sind.

2. Brühkammer nach Anspruch 1, **dadurch gekennzeichnet, dass** die Sperre (62) allgemein in Richtung der Längsachse (L) von einer Schließposition im Schließzustand der Brühkammer (1) in eine Öffnungsposition bewegbar ist und in der Öffnungsposition ein Ausweichen der jeweiligen Kugel (58) nach außen gestattet.

3. Brühkammer nach Anspruch 1 oder 2, **dadurch gekennzeichnet, dass** das Unterteil (2) eine Seitenwand (14) aufweist, an deren Außenseite die Vertiefungen (60) angeordnet sind.

4. Brühkammer nach Anspruch 3, **dadurch gekennzeichnet, dass** die Vertiefungen als für alle Kugeln (58) gemeinsame umlaufende Rille (60) in der Seitenwand (14) des Unterteils (2) ausgestaltet sind.

5. Brühkammer nach Anspruch 3 oder 4, **dadurch gekennzeichnet, dass** die Kugelführungen als Durchgangsöffnungen (52) in einem Kugelhalter (50) ausgestaltet sind, der eine Komponente des Oberteils (4) darstellt und im Schließzustand der Brühkammer (1) die Seitenwand (14) des Unterteils (2) zumindest teilweise überdeckt.

6. Brühkammer nach Anspruch 5, **dadurch gekennzeichnet, dass** die Durchgangsöffnungen (52) radial nach innen (56) zu verengt sind, um ein Herausfallen der Kugeln (58) nach innen zu verhindern.

7. Brühkammer nach Anspruch 5 oder 6 in Verbindung mit Anspruch 2, **dadurch gekennzeichnet, dass** die Sperre (62) eine Komponente des Oberteils (4) darstellt und als umlaufender Ring (34, 62) ausgestaltet ist, der relativ zu dem Kugelhalter (50) verschiebbar ist, in der Schließposition die Außenseiten (54) der Durchgangsöffnungen (52) abdeckt und in der Öffnungsposition ein radiales Ausweichen der Kugeln (58) in einen Zwischenraum (64) gestattet.

8. Brühkammer nach Anspruch 7, **dadurch gekennzeichnet, dass** die Sperre (62) in Bezug auf den Kugelhalter (50) durch Federwirkung (42) auf die Öffnungsposition zu vorgespannt ist.

9. Brühkammer nach einem der Ansprüche 1 bis 8, **dadurch gekennzeichnet, dass** zwischen dem Oberteil (4) und dem Unterteil (2) eine druckfeste Dichtung (48) vorgesehen ist.

10. Brühkammer nach einem der Ansprüche 1 bis 9, **dadurch gekennzeichnet, dass** das Oberteil (4) einen zentralen Dekkelbereich (38) aufweist, von dem mindestens ein Einstichdorn (46) nach unten vorragt.

11. Brühkammer nach einem der Ansprüche 1 bis 10, **dadurch gekennzeichnet, dass** das Unterteil (2) einen Bodenbereich (12) aufweist, von dem mindestens ein Einstichdorn (22) nach oben vorragt, der vorzugsweise von einer Feder (28) umgeben ist.

12. Brühkammer nach einem der Ansprüche 1 bis 11, **dadurch gekennzeichnet, dass** die Brühkammer (1) zur Verwendung mit einer das Brühgut enthaltenden Portionskapsel eingerichtet ist.

13. Brühmaschine, mit einer Brühkammer (1) nach einem der Ansprüche 1 bis 12 und mit einer Heißwassereinrichtung (78, 80) zum Zubereiten von Brühwasser und Zuführen des Brühwassers zu dem Einlass (44) der Brühkammer (1).

14. Brühmaschine nach Anspruch 13 in Verbindung mit Anspruch 2, **dadurch gekennzeichnet, dass** die Brühmaschine (70) einen Deckel (74) aufweist, der von einem Betriebszustand in einen Öffnungszustand bewegbar ist, in dem das Oberteil (4) der Brühkammer (1) von dem Unterteil (2) der Brühkammer (1) abgehoben und das Unterteil (2) der Brühkammer (1) zugänglich ist, wobei der Deckel (74) mit der Sperre (62) gekoppelt ist und bei der Bewegung vom Betriebszustand in den Öffnungszustand die Sperre (62) in die Öffnungsposition bewegt.

15. Brühmaschine nach Anspruch 14, **gekennzeichnet durch** eine Rasteinrichtung, die dazu eingerichtet ist, den Deckel (74) im Betriebszustand zu verrasten.
